# EUROPEAN PATENT SPECIFICATION

(11) **EP 2 699 526 B1**
(45) Date of publication and mention of the grant of the patent: **01.09.2021**
(21) Application number: 12710095.6
(22) Date of filing: 23.03.2012
(51) Int. Cl.: C04B 28/02, C04B 28/04, C04B 28/08, C04B 28/10, C04B 28/12, C04B 28/14, C04B 28/18, C04B 28/22, C04B 41/45, C04B 41/50

(54) **ACCELERATOR COMPOSITION, PROCESS FOR PRODUCING IT AND ITS USES**
BESCHLEUNIGERZUSAMMENSETZUNG, VERFAHREN ZU IHRER HERSTELLUNG SOWIE IHRE VERWENDUNGEN
COMPOSITION D'ACCÉLÉRATEUR, PROCÉDÉ POUR SA FABRICATION AINSI QUE SES UTILISATIONS

(30) Priority: 21.04.2011 EP 11163423
(43) Date of publication of application: 26.02.2014
(73) Proprietor: BASF Construction Additives GmbH, 83308 Trostberg (DE)
(72) Inventor: BICHLER, Manfred, 84549 Engelsberg (DE); HESSE, Christoph, 85560 Ebersberg (DE)
(74) Representative: BASF IP Association
(86) International application number: PCT/EP2012/055211
(87) International publication number: WO 2012/143206

(56) References cited:
- EP-A1- 2 075 240
- WO-A1-2010/026155
- WO-A1-2011/026720
- WO-A2-2011/026825
- None

## Description

The present invention relates to a composition containing calcium silicate hydrate and at least one (co)polymer having carboxylic acid groups and/or carboxylate groups and sulphonic acid groups and/or sulphonate groups, wherein the molar ratio of the number of carboxylic acid groups and/or carboxylate groups to the sulphonic acid groups and/or sulphonate groups is from 1/20 to 20/1, also processes for producing the compositions, their use as curing accelerators and as grinding aid in the production of cement. The invention likewise relates to building material mixtures which contain the compositions.

Pulverulent curing accelerators for cement-based building material mixtures which owing to their solid state are fundamentally suitable for use in dry mortar mixtures are known from the prior art. Examples of such accelerators are calcium nitrate, calcium formate, calcium chloride and lithium carbonate. A disadvantage of chloride- or nitratecontaining accelerators are their adverse effects on the corrosion resistance of, for example, steel-reinforced concrete. Owing to national standards, there are use restrictions. Efflorescence on the surface of cured building materials can, especially when calcium salts are used, likewise represent a problem (for example in the case of calcium formate).

In many applications, it is necessary to achieve even greater acceleration of setting and higher early strengths in cement-based systems, for example in mortar or concrete. However, the abovementioned types of accelerators and other commercial accelerators do not at present make it possible for a person skilled in the art to achieve this objective using relatively small added amounts of the accelerator, for example less than 0.5% by weight based on the mass of the (portland) cement used. Furthermore, a naturally undesirable loss of final strength is observed in the case of the commercial accelerators, particularly at relatively high added amounts. There is thus a great need to achieve higher early strengths in many applications, which is not possible when the accelerators, in particular pulverulent accelerators, known at present in the prior art are used.

Suspensions of calcium silicate hydrate (C-S-H) have been used recently as highly efficient accelerators in (portland) cement-containing building material mixtures such as concrete. They make it possible to achieve significantly higher early strengths (6 hours) compared to the commercial accelerators. Essentially no decrease in the final strengths (28 days) is observed here. Such suspensions are described in WO 2010026155 A1. However, it is not possible for practical reasons to formulate dry mortar mixtures which contain essentially (portland) cement as binder when using the water-containing suspensions of calcium silicate hydrate (C-S-H), since the water content of the suspensions would lead to unacceptable, at least partially premature hydration of the binder.

In the technical field of (portland) cement-containing dry mortar mixtures, there is, as for non-dry mortar applications such as concrete, a great need for suitable, in particular dry, preferably pulverulent, highly effective accelerators in order to make possible, even in dry mortar systems, a significant increase in the early strengths (after 6 hours), preferably without decreases in the final strengths (strengths after 28 days). In the concrete sector, dry or pulverulent additives are not absolutely necessary but cost advantages can be achieved by avoidance of unnecessary transport of water. Efflorescence on the surface of the cured building materials should also be prevented if possible.

It is therefore an object of the present invention to provide accelerators which overcome the abovementioned disadvantages of the prior art. In particular, the accelerators should allow an effective increase in the early strengths, in the case of dry mortar mixtures together with good compatibility with water-sensitive binders or binders which set hydraulically in the presence of water, for example (portland) cement. In particular, the final strengths of the building material mixtures should not be adversely affected while the early strengths are effectively increased. It is also an object of the invention to provide highly efficient accelerator suspensions which, in particular, achieve very good early strengths after 6 hours compared to commercial accelerators without a decrease in final strengths (28 days).

The object of the invention is achieved by a composition containing calcium silicate hydrate and at least one (co)polymer having carboxylic acid groups and/or carboxylate groups and sulphonic acid groups and/or sulphonate groups, wherein the ratio of the number of carboxylic acid groups and/or carboxylate groups to the sulphonic acid groups and/or sulphonate groups is from 1/20 to 20/1, preferably from 1/5 to 5/1, particularly preferably from 1/2 to 2/1, and the weight average molecular weight M_{w} of the (co)polymer(s) is from 8 000 g/mol to 200 000 g/mol, the weight average molecular weight M_{w} is determined by means of size exclusion chromatography according to the indications in the specification of WO 2012/143206 A1 on page 13, lines 35 to 41 and also by a process for producing an aqueous calcium silicate hydrate-containing suspension which is preferably suitable as setting and curing accelerator for (portland) cement-containing binder systems by reaction of a water-soluble calcium compound with a water-soluble silicate compound in the presence of an aqueous solution containing at least one (co)polymer having carboxylic acid groups and/or carboxylate groups and sulphonic acid groups and/or sulphonate groups, wherein the ratio of the number of carboxylic acid groups and/or carboxylate groups to the sulphonic acid groups and/or sulphonate groups is from 1/20 to 20/1, preferably from 1/5 to 5/1, particularly preferably from 1/2 to 2/1 and the weight average molecular weight M_{w} of the (co)polymer(s) is from 8 000 g/mol to 200 000 g/mol, the weight average molecular weight M_{w} is determined by means of size exclusion chromatography according to the indications in the specification of WO 2012/143206 A1 on page 13, lines 35 to 41. The object is also achieved by the use of the compositions according to the invention as grinding aid in the production of cement.

Furthermore, the invention relates to a process for producing an aqueous calcium silicate hydrate-containing suspension which is preferably suitable as setting and curing accelerator for (portland) cement-containing binder systems by reaction of a calcium compound, preferably a calcium salt and in particular a water-soluble calcium salt, with a silicon dioxide-containing compound under alkaline conditions, characterized in that the reaction takes place in the presence of an aqueous solution of a (co)polymer having carboxylic acid groups and/or carboxylate groups and sulphonic acid groups and/or sulphonate groups, where the molar ratio of the number of carboxylic acid groups and/or carboxylate groups to the sulphonic acid groups and/or sulphonate groups is from 1/20 to 20/1, preferably from 1/5 to 5/1, particularly preferably from 1/2 to 2/1 and the weight average molecular weight M_{w} of the (co)polymer(s) is from 8 000 g/mol to 200 000 g/mol, the weight average molecular weight M_{w} is determined by means of size exclusion chromatography according to the indications in the specification of WO 2012/143206 A1 on page 13, lines 35 to 41.

The object of the invention is also achieved by a process for producing solid, preferably pulverulent, compositions, wherein the following process steps are carried out:
a) mixing of an aqueous suspension of calcium silicate hydrate which is preferably suitable as setting and curing accelerator for (portland) cement-containing binder systems with at least one (co)polymer having carboxylic acid groups and/or carboxylate groups and sulphonic acid groups and/or sulphonate groups, where the ratio of the number of carboxylic acid groups and/or carboxylate groups to the sulphonic acid groups and/or sulphonate groups is from 1/20 to 20/1, preferably from 1/5 to 5/1, particularly preferably from 1/2 to 2/1,
b) optionally setting of a suitable solids content of the product from step a) by dilution with water and
c) drying of the product from step a) or b), preferably at temperatures below 150°C, particularly preferably at temperatures of less than 100°C, in particular at temperatures of less than 80°C and most preferably at temperatures in the range from 15°C to 80°C.

The object is also achieved by the use of the compositions according to the invention as curing accelerators in building material mixtures containing (portland) cement, slag sand, fly ash, silica dust, metakaolin, natural pozzuolanas, calcined oil shales and/or calcium aluminate cement, preferably by the use of the compositions according to the invention as curing accelerators in building material mixtures containing (portland) cement and binders based on calcium sulphate, particularly preferably by the use of the compositions according to the invention as curing accelerators in building material mixtures which contain essentially (portland) cement as binder.

The object is also achieved by building material mixtures containing the compositions according to the invention and (portland) cement, slag sand, fly ash, silica dust, metakaolin, natural pozzuolanas, calcined oil shales and/or calcium aluminate cement, preferably by building material mixtures containing the compositions according to the invention, (portland) cement and binders based on calcium sulphate, particularly preferably by building material mixtures which contain the compositions according to the invention and contain essentially (portland) cement as binder.

The composition of the invention can be present in the solid state or as an aqueous suspension. In the case of solid compositions, this is preferably pulverulent and the particle size is particularly preferably less than 1000 µm, particularly preferably less than 700 µm. The composition of the invention is preferably an accelerator composition and is preferably suitable as setting and curing accelerator for (portland) cement-containing binder systems. The composition is preferably free of binders, particularly preferably free of (portland) cement. The suspensions are thus preferably essentially stable, aqueous suspensions which do not set hydraulically without addition of binders, particularly without addition of (portland) cement. The compositions of the invention contain at least one inorganic component and at least one organic component. The inorganic component can preferably be regarded as a modified, preferably finely divided calcium silicate hydrate (C-S-H) which can contain foreign ions such as magnesium and aluminium. The inorganic component calcium silicate hydrate (C-S-H) can in most cases have a composition described by the following formula:

a CaO, SiO₂, b Al₂O₃, c H₂O, d X₂O, e WO,

X is an alkali metal,
W is an alkaline earth metal, preferably W is an alkaline earth metal which is different from calcium,

| | | |
|---|---|---|
| 0.1 ≤ a ≤ 2 | preferably | 0.66 ≤ a ≤ 1.8 |
| 0 ≤ b ≤ 1 | preferably | 0 ≤ b ≤ 0.1 |
| 1 ≤ c ≤ 6 | preferably | 1 ≤ c ≤ 6.0 |
| 0 ≤ d ≤ 1 | preferably | 0 ≤ d ≤ 0.4 |
| 0 ≤ e ≤ 2 | preferably | 0 ≤ e ≤ 0.1. |

The molar ratios are particularly preferably selected so that a, b and e are in the abovementioned preferred ranges in the above formula (0.66 ≤ a ≤ 1.8; 0 ≤ b ≤ 0.1; 0 ≤ e ≤ 0.1).

The calcium silicate hydrate is preferably present in the form of foshagite, hillebrandite, xonotlite, nekoite, clinotobermorite, 9Å - tobermorite (riversiderite), 11Å - tobermorite, 14Å - tobermorite (plombierite), jennite, metajennite, calcium chondrodite, afwillite, α - C₂SH, dellaite, jaffeite, rosenhahnite, killalaite and/or suolunite, particularly preferably xonotlite, 9Å-tobermorite (riversiderite), 11Å - tobermorite, 14Å - tobermorite (plombierite), jennite, metajennite, afwillite and/or jaffeite in the compositions of the invention. The molar ratio of calcium to silicon in the calcium silicate hydrate is preferably from 0.66 to 1.8 and particularly preferably from 0.66 to 1.8. The molar ratio of calcium to water in the calcium silicate hydrate is preferably from 0.6 to 6, particularly preferably from 0.6 to 2 and in particular from 0.8 to 2.

The organic component of the composition is at least one (co)polymer having carboxylic acid groups and/or carboxylate groups and sulphonic acid groups and/or sulphonate groups, where the ratio of the number of carboxylic acid groups and/or carboxylate groups to the sulphonic acid groups and/or sulphonate groups is from 1/20 to 20/1, preferably from 1/5 to 5/1, particularly preferably from 1/2 to 2/1. This means that the sum of the carboxylic acid groups and carboxylate groups is formed and the sum of the sulphonic acid groups and sulphonate groups is likewise formed and the above-defined ratio of the specified sums is formed therefrom. The formulation "and/or" here means, as generally customary, that each of the abovementioned chemical groups can be present in protonated or salt form or in mixed form. The (co)polymers according to the invention are preferably water-soluble, with a water solubility of greater than 10 g/l at 20°C. The (co)polymers preferably have a main polymer chain of carbon atoms and the carboxylic acid group or carboxylate group is preferably located directly on carbon atoms of the main polymer chain.

The (co)polymers are preferably produced by free-radical (co)polymerisation of monoethylenically unsaturated monomers having a carbon-carbon double bond. Particular preference is given to using carboxylic acid monomers, in particular monocarboxylic acid monomers, and monomers comprising sulphonic acid groups in the production of the (co)polymers according to the invention.

In the present patent application, the term carboxylic acid monomer likewise refers to the monomers present in salt form as carboxylate (carboxylate monomers) and the term monomers comprising sulphonic acid groups correspondingly refers to the monomers present in salt form as sulphonate (sulphonate monomers). These can also be present in mixed form.

Examples of appropriate carboxylic acid monomers are (meth)acrylic acid, ethacrylic acid, α-chloroacrylic acid, α-cyanoacrylic acid, β-methacrylic acid (crotonic acid), α-phenylacrylic acid, β-acryloxypropionic acid, sorbic acid, α-chlorosorbic acid, 2'-methylisocrotonic acid, cinnamic acid, p-chlorocinnamic acid, β-stearyl acid, itaconic acid, citraconic acid, mesaconic acid, glutaconic acid, aconitic acid, maleic acid, fumaric acid and/or tricarboxyethylene, with (meth)acrylic acid and especially acrylic acid being particularly preferred. Preference is given to monocarboxylic acids. It is possible to use one or more carboxylic acid monomers. Maleic acid is less well suited, especially when used in relatively high proportions, since, owing to the relatively high affinity for calcium ions (α - carboxyl groups), a retarding influence on the setting behaviour and the early strengths (6 hours after mixing) of hydraulically setting binder mixtures is observed. The proportion of carboxylic acid groups derived from maleic acid should therefore be less than 20 mol% of all carboxylic acid groups in the copolymer, preferably less than 10 mol%, and especial preference is given to not using any maleic acid.

Examples of appropriate sulphonic acid monomers are one or more of the monomer species (meth)allylsulphonic acid, vinylsulphonic acid, styrenesulphonic acid, 2-acrylamido-2-methylpropanesulphonic acid, 2-methacrylamido-2-methylpropanesulphonic acid, 2-acrylamidobutanesulphonic acid, and 2-acrylamido-2,4,4-trimethylpentane sulphonic acid or in each case the salts of the acid mentioned. Particular preference is given to 2-acrylamido-2-methylpropanesulphonic acid (AMPS) and salt compounds thereof. The cations belonging to the salt compounds of the acids are not restricted in any particular way and can preferably in each case be present as monovalent or divalent metal cations, preferably sodium, potassium, calcium or magnesium ions or as ammonium ions which are derived from ammonia, primary, secondary or tertiary C₁-C₂₀-alkylamines, C₁-C₂₀-alkanolamines, C₅-C₈-cycloalkylamines and C₆-C₁₄-arylamines. The alkyl radicals can in each case be branched or unbranched. Examples of such amines are methylamine, dimethylamine, trimethylamine, ethanolamine, diethanolamine, triethanolamine, cyclohexylamine, dicyclohexylamine, phenylamine and diphenylamine. Preferred cations are alkali metal ions and/or ammonium ions, with particular preference being given to the sodium ion.

Preference is given to compositions in which the (co)polymers comprise structural units which comprise sulphonic acid groups and have the general formula (II), preferably in an amount of from 5 to 95 mol%, particularly preferably from 15 to 85 mol%, 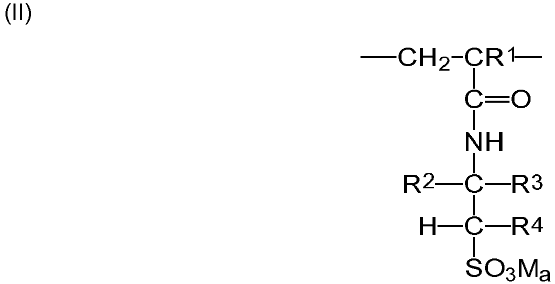 where

the radicals R¹ are identical or different and are each hydrogen or a methyl radical, R², R³, R⁴ are identical or different and are each, independently of one another, hydrogen, an aliphatic, branched or unbranched hydrocarbon radical having from 1 to 6 carbon atoms or an aromatic hydrocarbon radical having from 6 to 14 carbon atoms, the atoms or ions M are identical or different and are each hydrogen, a monovalent or divalent metal cation or an ammonium ion, the indices a are identical or different and are each 1/2 or 1. In the case of divalent metal cations, a is 1/2.

The (co)polymers according to the invention can be prepared in a manner known per se by coupling the monomers forming the respective structural units by free-radical polymerisation. All monomers present as acid can be polymerized as free acids or in their salt form. Furthermore, the neutralisation of the acids can be effected by addition of appropriate bases even after the copolymerisation; partial neutralisation before or after the polymerisation is likewise possible. The neutralisation of the monomers or of the copolymers can, for example, be carried out by means of the bases sodium hydroxide, potassium hydroxide, calcium hydroxide, magnesium hydroxide and/or ammonia. Further suitable bases are primary, secondary or tertiary C₁-C₂₀-alkylamines having, in each case, branched or unbranched alkyl groups, C₁-C₂₀-alkanolamines, C₅-C₈-cycloalkylamines and/or C₆-C₁₄-arylamines. It is possible to use one or more bases. Preference is given to carrying out the neutralisation by means of alkali metal hydroxides and/or ammonia, with particular preference being given to sodium hydroxide. The inorganic or organic bases should be selected so that they form relatively readily water-soluble salts with the respective acid.

The (co)polymerisation can be initiated either by means of a redox initiator system or a photoinitiator. A combination of the two initiator variants is also possible. The redox initiator system comprises at least two components, viz. an organic or inorganic oxidant and an organic or inorganic reducing agent. Use is frequently made of compounds having peroxide units, e.g. inorganic peroxides such as alkali metal and ammonium persulphate, alkali metal and ammonium perphosphates, hydrogen peroxide and salts thereof (sodium peroxide, barium peroxide) or organic peroxides such as benzoyl peroxide, butyl hydroperoxide or peracids such as peracetic acid. However, it is also possible to use other oxidants, for example potassium permanganate, sodium and potassium chlorate, potassium dichromate, etc. As reducing agents, it is possible to use sulphur-comprising compounds such as sulphites, thiosulphates, sulphinic acid, organic thiols (for example ethyl mercaptan, 2-hydroxyethanethiol, 2-mercaptoethyl-ammonium chloride, thioglycolic acid) and others. Ascorbic acid and low-valency metal salts [copper(I); manganese(II); iron(II)] are also possible. It is also possible to use phosphorus compounds, for example sodium hypophosphite.

In the case of a photopolymerisation, this is initiated by means of UV light which brings about decomposition of a photoinitiator. As photoinitiator, it is possible to use benzoin and benzoin derivatives such as benzoin ethers, benzil and derivatives thereof, e.g. benzil ketals, acryldiazonium salts, azo initiators such as 2,2'-azobis(isobutyronitrile), 2,2'-azobis(2-amidinopropane) hydrochloride and/or acetophenone derivatives. The proportion by weight of the oxidising component and the reducing component in the case of the redox initiator systems is preferably in each case in the range from 0.00005 to 0.5% by weight, particularly preferably in each case from 0.001 to 0.1% by weight. In the case of photoinitiators, this range is preferably from 0.001 to 0.1% by weight, particularly preferably from 0.002 to 0.05% by weight. The percentages by weight indicated for oxidising and reducing components and photoinitiators are in each case based on the mass of the monomers used for the copolymerisation.

The (co)polymerisation is preferably carried out batchwise in aqueous solution, preferably in concentrated aqueous solution, in a polymerisation vessel (batch process).

Further monomers which can be present in addition to the abovementioned carboxylic acid monomers and monomers comprising sulphonic acid groups in the (co)polymer are, for example, acrylonitrile, methacrylonitrile, vinylpyridine, isoprenol, hydroxybutyl vinyl ether, hydroxyethyl vinyl ether or alkoxylates, preferably ethoxylates, of the abovementioned ethylenically unsaturated alcohols, esters of (meth)acrylic acid with alkylpolyalkylene glycols (preferably methylpolyethylene glycols (M-PEG)), styrene, vinyl acetate and/or hydroxyl-comprising (meth)acrylic esters such as hydroxyethyl (meth)acrylate and/or hydroxypropyl (meth)acrylate. The content of these further monomers is preferably less than 50 mol%, particularly preferably less than 20 mol%, in particular 0 mol%. The figures in mol% are in each case based on the sum of all monomers in the (co)polymer.

Preferred compositions are those comprising calcium silicate hydrate and at least one (co)polymer which contains carboxylic acid groups and/or carboxylate groups and sulphonic acid groups and/or sulphonate groups, where the molar ratio of the number of carboxylic acid groups and/or carboxylate groups to the sulphonic acid groups and/or sulphonate groups is from 1/20 to 20/1, characterized in that further polymers are present which comprise at least one polyether side chain and at least one phosphoric ester group and/or salt residue thereof. The polyether side chain is preferably a polyalkylene glycol, particularly preferably a polyethylene glycol.

Particularly preferred compositions are those comprising calcium silicate hydrate and at least one (co)polymer which contains carboxylic acid groups and/or carboxylate groups and sulphonic acid groups and/or sulphonate groups, where the molar ratio of the number of carboxylic acid groups and/or carboxylate groups to the sulphonic acid groups and/or sulphonate groups is from 1/20 to 20/1, preferably 1/5 to 5/1, more preferably 1/2 to 2/1, characterized in that further polymers present are polycondensation products which comprise
(I) at least one structural unit consisting of an aromatic or heteroaromatic radical containing a polyether side chain, preferably a polyalkylene glycol side chain, particularly preferably a polyethylene glycol side chain, and
(II) at least one structural unit consisting of an aromatic or heteroaromatic radical containing at least one phosphoric ester group and/or salt thereof.

With particular preference the structural units (I) and (II) are defined by the following general formulae 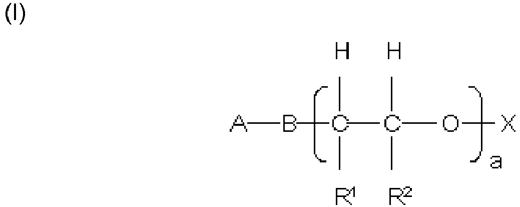 where

A is identical or different and is represented by a substituted or unsubstituted aromatic or heteroaromatic compound having 5 to 10 C atoms
where
   B is identical or different and is represented by N, NH or O
where
   n is 2 if B is N, and n is 1 if B is NH or O
where
   R¹ and R² independently of one another are identical or different and are represented by a branched or unbranched C₁ to C₁₀ alkyl radical, C₅ to C₈ cycloalkyl radical, aryl radical, heteroaryl radical or H
where
   a is identical or different and is represented by an integer from 1 to 300
where
   X is identical or different and is represented by a branched or unbranched C₁ to C₁₀ alkyl radical, C₅ to C₈ cycloalkyl radical, aryl radical, heteroaryl radical or H, preferably H, 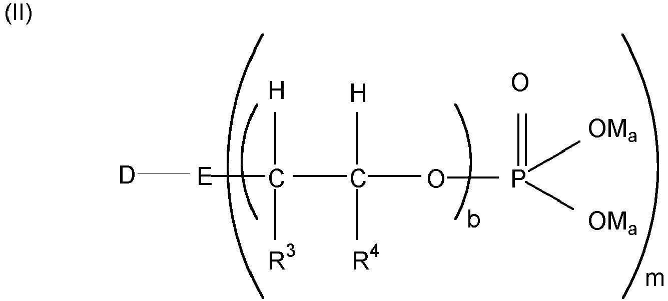
where
   D is identical or different and is represented by a substituted or unsubstituted heteroaromatic compound having 5 to 10 C atoms
where
   E is identical or different and is represented by N, NH or O
where
   m is 2 if E is N, and m is 1, if E is NH or O
where
   R³ and R⁴ independently of one another are identical or different and are represented by a branched or unbranched C₁ to C₁₀ alkyl radical, C₅ to C₈ cycloalkyl radical, aryl radical, heteroaryl radical or H
where
   b is identical or different and is represented by an integer from 1 to 300
where
   M independently at each occurrence is an alkali metal ion, alkaline earth metal ion, ammonium ion, organic ammonium ion and/or H, a is 1 or in the case of alkaline earth metal ions is 1/2.

The groups A and D in the general formulae (I) and (II) of the polycondensation product are represented preferably by phenyl, 2-hydroxyphenyl, 3-hydroxyphenyl, 4-hydroxyphenyl, 2-methoxyphenyl, 3-methoxyphenyl, 4-methoxyphenyl, naphthyl, 2-hydroxynaphthyl, 4-hydroxynaphthyl, 2-methoxynaphthyl, 4-methoxynaphthyl, preferably phenyl, where A and D may be selected independently of one another and may also consist in each case of a mixture of the stated compounds. The groups B and E are represented independently of one another preferably by O. The radicals R¹, R², R³ and R⁴ may be selected independently of one another and are represented preferably by H, methyl, ethyl or phenyl, particularly preferably by H or methyl and especially preferably by H.

In the general formula (I), a is represented preferably by an integer from 1 to 300, more particularly 3 to 200 and particularly preferably 5 to 150, and b in the general formula (II) by an integer from 1 to 300, preferably 1 to 50 and particularly preferably 1 to 10. The respective radicals, whose length is defined by a and b, respectively, may consist in this case of uniform structural groups, although it may also be useful for them to be a mixture of different structural groups. Furthermore, the radicals of the general formulae (I) or (II) may independently of one another each possess the same chain length, in which case a and b are each represented by one number. In general it will be useful if mixtures of different chain lengths are present in each case, so that the radicals of the structural units in the polycondensation product have different numerical values for a and, independently, for b.

The phosphatized polycondensation product frequently has a weight-average molecular weight of 5 000 g/mol to 200 000 g/mol, preferably 10 000 to 100 000 g/mol and particularly preferably 15 000 to 55 000 g/mol.

The phosphatized polycondensation product may also be present in the form of its salts, such as, for example, the sodium, potassium, organic ammonium, ammonium and/or calcium salt, preferably the sodium and/or calcium salt.

The molar ratio of the structural units (I):(II) is typically 1:10 to 10:1 and preferably 1:8 to 1:1.

In one preferred embodiment of the invention, the polycondensation product comprises a further structural unit (III), which is represented by the following formula: 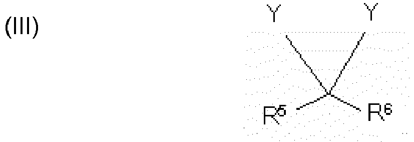 where
Y independently at each occurrence is identical or different and is represented by (I), (II) or further constituents of the polycondensation product where
R⁵ is identical or different and is represented by H, CH₃, COOH or a substituted or unsubstituted aromatic or heteroaromatic compound having 5 to 10 C atoms, preferably H
where
R⁶ is identical or different and is represented by H, CH₃, COOH or substituted or unsubstituted aromatic or heteroaromatic compound having 5 to 10 C atoms, preferably H.

R⁵ and R⁶ in structural unit (III) are typically, independently of one another, identical or different and are represented by H, COOH and/or methyl. H is especially preferred.

In another embodiment the molar ratio of the structural units [(I) + (II)]:(III) in the polycondensate is 1:0.8 to 3.

Further information on the phosphatized polycondensation products and their preparation can be found in the disclosure content of WO 2011/026720 A1.

Preferred compositions are those comprising calcium silicate hydrate, where the calcium silicate hydrate does not come from a hydration reaction of (portland) cement with water, and at least one (co)polymer which contains carboxylic acid groups and/or carboxylate groups and sulphonic acid groups and/or sulphonate groups, where the molar ratio of the number of carboxylic acid groups and/or carboxylate groups to the sulphonic acid groups and/or sulphonate groups is from 1/20 to 20/1.

Preferred compositions are those comprising calcium silicate hydrate and at least one (co)polymer which contains carboxylic acid groups and/or carboxylate groups and sulphonic acid groups and/or sulphonate groups, where the molar ratio of the number of carboxylic acid groups and/or carboxylate groups to the sulphonic acid groups and/or sulphonate groups is from 1/20 to 20/1, the composition comprising no (portland) cement. Particularly preferred compositions comprise calcium silicate hydrate and at least one (co)polymer which contains carboxylic acids groups and/or carboxylate groups and sulphonic acid groups and/or sulphonate groups, where the molar ratio of the number of carboxylic acid groups and/or carboxylate groups to the sulphonic acid groups and/or sulphonate groups is from 1/20 to 20/1, and the composition comprises no (portland) cement that has come into contact with water. By (portland) cement which has come into contact with water is meant here, additionally, mixtures of (portland) cement and water that have undergone interim drying and that may include a preferably small water component.

Preferred embodiments of the compositions are specified in the dependent claims and are described in the following.

Preference is given to compositions which are an aqueous suspension. In the case of aqueous suspensions, the proportion of water is preferably 50-99% by weight, particularly preferably 70-99% by weight.

In a further embodiment of the invention, solid compositions are preferred. These can be obtained, for example, by spray drying the suspensions. The proportion of water in the solid compositions of the invention should preferably be less than 15% by weight, particularly preferably less than 10% by weight. The abovementioned proportion of water can comprise both free water still present in the solid composition and water bound in the calcium silicate hydrate. The water content of the powders is preferably determined by drying to constant weight at 60°C in a drying oven, with the weight difference observed being considered to be the proportion of water.

The compositions are preferably free of (portland) cement.

Preference is given to salts, particularly preferably water-soluble salts having a solubility in water at 20°C of greater than 1 g/l, being present in the, preferably solid, compositions. Preferred salts in terms of the anionic part are sulphates, nitrates, halides, thiocyanates, formates and/or acetates. As regards the cationic part, preference is given to alkali metals, in particular sodium or potassium. Examples of particularly preferred salts are sodium nitrate, sodium acetate, sodium formate and sodium sulphate.

Preference is given to compositions in which the (co)polymer has a main polymer chain of carbon atoms and the ratio of the sum of the number of moles of carboxylic acid groups and/or carboxylate groups and sulphonic acid groups and/or sulphonate groups to the number of moles of carbon atoms in the main polymer chain is in the range from 0.1 to 0.6, preferably from 0.2 to 0.55. Here, the abovementioned ratio is calculated by forming the sum of the number of moles of all carboxylic acid groups, carboxylate groups, sulphonic acid groups and sulphonate groups in the (co)polymers and dividing this by the number of moles of carbon atoms in the main polymer chain. For example, a copolymer of acrylic acid and allylsulphonic acid in a molar ratio of 1/1 would give a ratio according to the above method of calculation of (1 mol of carboxylic acid + 1 mol of sulphonic acid) / 4 mol of carbon atoms (corresponds to 2/4). In the case of a terpolymer of acrylic acid, allylsulphonic acid and styrene in a molar ratio of 1/1/1, the ratio would be, for example, (1 mol of carboxylic acid + 1 mol of sulphonic acid) / 6 mol of carbon atoms (corresponds to 2/6). Any radicals which are present in the (co)polymers according to the invention and cannot be assigned to (co)monomers, for example radicals of chain termination reagents or chain initiators, are preferably not taken into account in the calculation of the ratio indicated above. If the charge density in the (co)polymer is too low, the efficiency of the accelerators after drying is not quite as good.

Preference is given to compositions in which the (co)polymer can be obtained from a free-radical (co)polymerisation and the carboxylic acid groups and/or carboxylate groups are derived from monocarboxylic acid monomers. Particular preference is given to (meth)acrylic acid, with acrylic acid being especially preferred.

Preference is given to compositions in which the (co)polymer can be obtained from a free-radical (co)polymerisation and the carboxylic acid groups and/or carboxylate groups are derived from the monomers acrylic acid and/or methacrylic acid, preferably acrylic acid, and the sulphonic acid groups and/or sulphonate groups are derived from 2-acrylamido-2-methylpropanesulphonic acid.

Preference is given to compositions in which the weight average molecular weight M_{w} of the (co)polymer(s) is preferably from 10 000 to 50 000 g/mol. The weight average molecular weight M_{w} is determined by means of size exclusion chromatography to determine average molar mass and conversion (column combinations: OH-Pak SB-G, OH-Pak SB 804 HQ and OH-Pak SB 802.5 HQ from Shodex, Japan; eluent: 80% by volume of an aqueous solution of HCO₂NH₄ (0.05 mol/l) and 20% by volume of acetonitrile; injection volume: 100 µl; flow rate: 0.5 ml/min). The calibration to determine the average molar mass was carried out using linear poly(ethylene oxide) and polyethylene glycol standards.

Preference is given to compositions, preferably aqueous suspensions, in which the average particle size of the calcium silicate hydrate (C-S-H) is less than 1000 nm, preferably less than 500 nm, in particular less than 200 nm, measured by light scattering using the Mastersizer® 2000 from Malvern.

Preference is given to compositions in which the weight ratio of the (co)polymer or the (co)polymers to calcium silicate hydrate is from 1/100 to 4/1, preferably from 1/10 to 2/1, particularly preferably from 1/5 to 1/1. When the amount of (co)polymer used is less than that corresponding to the abovementioned weight ratio, the stabilising action, in particular, during drying becomes too weak and the efficiency as accelerator for the compositions is less good. Amounts of stabilizer which are greater still bring about no significant further improvement in the effectiveness of the accelerators, and the compositions are no longer very economically viable.

The invention also relates to two processes for producing an aqueous suspension containing calcium silicate hydrate which is preferably suitable as setting and curing accelerator for binder systems containing (portland) cement. Preferably, all production processes for producing aqueous suspensions containing calcium silicate hydrate that are suitable preferably as setting and curing accelerators for binder systems containing (portland) cement are carried out in the absence of inorganic binders, with particular preference in the absence of (portland) cement. In this context, step a) of the process, in particular, is carried out preferably in the absence of inorganic binders, with particular preference in the absence of (portland) cement.

In a preferred process, the aqueous suspension containing calcium silicate hydrate is produced by reaction of a water-soluble calcium compound whose solubility in water at 20°C is preferably more than 0.5 g/l, particularly preferably more than 1.5 g/l, in particular more than 10 g/l, with a water-soluble silicate compound whose solubility in water at 20°C is preferably more than 0.01 g/l, particularly preferably more than 1 g/l, in particular more than 10 g/l, in the presence of an aqueous solution containing at least one (co)polymer having carboxylic acid groups and/or carboxylate groups and sulphonic acid groups and/or sulphonate groups, where the ratio of the number of carboxylic acid groups and/or carboxylate groups to the sulphonic acid groups and/or sulphonate groups is from 1/20 to 20/1, preferably from 1/5 to 5/1, particularly preferably from 1/2 to 2/1.

Any process which ensures that the calcium silicate hydrate is produced in the presence of the (co)polymers according to the invention is suitable. This means, in particular, that, for example, mixing of the calcium component with the silicate component in the absence of the (co)polymers does not lead to the objective. The calcium component should, for the purposes of the present patent application, be understood as a collective term for water-soluble calcium compound and calcium compound. The silicate component should correspondingly be understood as a collective term for water-soluble silicate compound and silicon dioxide-containing compound.

Particular preference is given to a process in which a solution of the water-soluble calcium compound and a solution of the water-soluble silicate compound are added to the aqueous solution containing the (co)polymer(s) according to the invention. Suitable analogous processes are described in WO 2010026155 A1, with the comb polymers described there being replaced by the (co)polymers according to the present patent application. For example, the (co)polymer according to the invention can be mixed with the calcium component and then with the silicate component, or vice versa. The calcium component and silicate component can also be added to an aqueous solution of the (co)polymer according to the invention in the respective processes. In particular, the calcium component and the silicate component are added separately to rule out any (premature) reaction of the components mentioned in the absence of the (co)polymer according to the invention.

Preference is given to the following ratios of amounts being used in the process:
i) from 0.01 to 75% by weight, preferably from 1 to 49% by weight, more preferably from 2 to 15% by weight, of the calcium component, preferably the water-soluble calcium compound,
ii) from 0.01 to 75% by weight, preferably from 1 to 49% by weight, more preferably from 2 to 10% by weight, of the silicate component, preferably the water-soluble silicate compound,
iii) from 0.01 to 60% by weight, preferably from 0.1 to 30% by weight, more preferably from 0.1 to 10% by weight, of the (co)polymer of the invention having carboxylic acid groups and/or carboxylate groups and sulphonic acid groups and/or sulphonate groups,
iv) from 50 to 99% by weight, preferably from 70 to 99% by weight, of water.

Preference is given to a process in which the water-soluble calcium compound is present as calcium chloride, calcium nitrate, calcium formate, calcium acetate, calcium bicarbonate, calcium bromide, calcium carbonate, calcium citrate, calcium chloride, calcium fluoride, calcium gluconate, calcium hydroxide, calcium hypochlorite, calcium iodate, calcium iodide, calcium lactate, calcium nitrite, calcium oxalate, calcium phosphate, calcium propionate, calcium silicate, calcium stearate, calcium sulphate, calcium sulphate hemihydrate, calcium sulphate dihydrate, calcium sulphide, calcium tartrate and/or calcium aluminate, tricalcium silicate and/or dicalcium silicate. Particular preference is given to calcium citrate, calcium tartrate, calcium formate, calcium acetate, calcium hydroxide and/or calcium sulphate, in particular calcium chloride, calcium nitrate and/or calcium sulphate. It is possible to use one or more of the water-soluble calcium compounds mentioned.

Preference is given to a process in which the water-soluble silicate compound is present as sodium silicate, potassium silicate, water glass, aluminium silicate, tricalcium silicate, dicalcium silicate, calcium silicate, silica, sodium metasilicate and/or potassium metasilicate. Particular preference is given to sodium metasilicate, potassium metasilicate and/or water glass. It is possible to use one or more of the water-soluble silicate compounds mentioned.

The process of the invention is preferably carried out in the absence of binders, preferably in the absence of hydraulic binders, particularly preferably in the absence of (portland) cement. The process products accordingly preferably do not contain any binders and particularly preferably no (portland) cement.

A further preferred process comprises producing an aqueous suspension of calcium silicate hydrate which is preferably suitable as setting and curing accelerator for (portland) cement-containing binder systems by reaction of a calcium compound, preferably a calcium salt and in particular a water-soluble calcium salt whose solubility in water at 20°C is preferably more than 1.5 g/l, particularly preferably more than 10 g/l at 20°C, with a silicon dioxide-containing compound under alkaline conditions, characterized in that the reaction takes place in the presence of an aqueous solution of a (co)polymer having carboxylic acid groups and/or carboxylate groups and sulphonic acid groups and/or sulphonate groups, where the molar ratio of the number of carboxylic acid groups and/or carboxylate groups to the sulphonic acid groups and/or sulphonate groups is from 1/20 to 20/1, preferably from 1/5 to 5/1, particularly preferably from 1/2 to 2/1 and the weight average molecular weight M_{w} of the (co)polymer(s) is from 8 000 g/mol to 200 000 g/mol, the weight average molecular weight M_{w} is determined by means of size exclusion chromatography according to the indications in the specification of WO 2012/143206 A1 on page 13, lines 35 to 41.

Any process which ensures that the calcium silicate hydrate is produced in the presence of the (co)polymers according to the invention is suitable. In this context, what has been said above in respect of the processes for mixing the calcium component and the silicate component applies analogously.

Preference is given to using the following ratios of amounts in the process:
i) from 0.01 to 75% by weight, preferably from 1 to 49% by weight, more preferably from 2 to 15% by weight, of the calcium component, preferably a calcium compound, particularly preferably a calcium salt,
ii) from 0.01 to 75% by weight, preferably from 1 to 49% by weight, more preferably from 2 to 10% by weight, of the silicate component, preferably the silicon dioxide-containing compound,
iii) from 0.01 to 60% by weight, preferably from 0.1 to 30% by weight, more preferably from 0.1 to 10% by weight, of the (co)polymer according to the invention having carboxylic acid groups and/or carboxylate groups and sulphonic acid groups and/or sulphonate groups,
iv) from 50 to 99% by weight, preferably from 70 to 99% by weight, of water.

The calcium compound is preferably calcium hydroxide and/or calcium oxide. The silicon dioxide-containing compound is preferably selected from the group consisting of microsilica, pyrogenic silica, precipitated silica, blast furnace slag and silica sand, with particular preference being given to microsilica, pyrogenic silica, precipitated silica, blast furnace slag and/or silica sand. The calcium compound is particularly preferably calcium hydroxide and/or calcium oxide and the silicon dioxide-containing compound is preferably selected from the group consisting of microsilica, pyrogenic silica, precipitated silica, blast furnace slag and silica sand. The abovementioned types of silica are defined in Ullmann's Encyclopedia of Industrial Chemistry, Wiley-VCH, Release 2009, 7th edition, DOI 10.1002/14356007.a23_583.pub3.

The process is carried out under alkaline conditions and preferably has a pH of greater than 9. The process is preferably characterized in that the molar ratio of the calcium of the calcium compound to the silicon of the silicon dioxide-containing compound is from 0.6 to 2 and preferably from 0.66 to 1.8. The weight ratio of water to the sum of the calcium compound and the silicon dioxide-containing component in the process is preferably from 0.2 to 50, preferably from 2 to 10 and in particular from 4 to 6. Here, the weight ratio is that of the water used in the production process to the sum of the masses of calcium compound and silicon dioxide-containing component used.

Particular preference is given to introducing mechanical energy into the reaction mixture, preferably by milling, in order to activate and/or accelerate the reaction of the calcium salt with the usually less water-soluble silicon dioxide-containing components. The mechanical energy is also advantageous for achieving the desired small particle sizes of the calcium silicate hydrates. The word "milling" as used in the present patent application refers to any process in which high shear forces are exerted on the reaction mixture in order to accelerate the reaction and obtain a suitable particle size. Milling can, for example, be carried out continuously or batchwise in a planetary ball mill or stirred ball mill. As an alternative, it is possible to use an ultradisperser, preferably at a speed of rotation of more than 5000 rpm. In addition, it is also possible to use a shaking apparatus in which small milling media, preferably having a diameter of less than 1 mm, are mixed and shaken with the reaction mixture in a container. The respective shaking apparatus can be obtained, for example, from Fast & Fluid.

The process of the invention is preferably carried out in the absence of binders, preferably in the absence of hydraulic binders, particularly preferably in the absence of (portland) cement. The process products accordingly preferably do not contain any binders.

The invention also provides a process for producing solid, preferably pulverulent, combinations, wherein the following process steps are carried out:
a) mixing of an aqueous suspension containing calcium silicate hydrate which is preferably suitable as setting and curing accelerator for (portland) cement-containing binder systems with at least one (co)polymer having carboxylic acid groups and/or carboxylate groups and sulphonic acid groups and/or sulphonate groups, where the ratio of the number of carboxylic acid groups and/or carboxylate groups to the sulphonic acid groups and/or sulphonate groups is from 1/20 to 20/1, preferably from 1/5 to 5/1, particularly preferably from 1/2 to 2/1,
b) optionally setting of a suitable solids content of the product from step a) by dilution with water and
c) drying of the product from step a) or b), preferably at temperatures below 150°C, particularly preferably at temperatures of less than 100°C, in particular at temperatures of less than 80°C and most preferably at temperatures in the range from 15°C to 80°C.

Step a) of the process can be carried out, for example, by mixing a suspension of calcium silicate hydrate, preferably of finely divided calcium silicate hydrate, with the (co)polymer(s) according to the invention.

The calcium silicate hydrate used as starting material in step a) can firstly be produced in the form of an aqueous suspension, preferably in the presence of a comb polymer plasticizer, as described in WO 2010026155 A1. The suspensions can preferably be produced by a process according to any of claims 1 to 15 of WO 2010026155 A1. The reaction is preferably a reaction of a water-soluble calcium compound with a water-soluble silicate compound in the presence of an aqueous solution containing a water-soluble comb polymer which is suitable as plasticizer for hydraulic binders. A suspension containing the calcium silicate hydrate (C-S-H) in finely divided form is usually obtained. The solids content of the suspension obtained in this way is preferably in the range from 1 to 50% by weight, particularly preferably from 10 to 30% by weight, in particular from 15 to 25% by weight.

Likewise, the aqueous suspension containing calcium silicate hydrate and (co)polymer according to the invention, i.e., in particular, aqueous suspensions according to any of claims 2 and 4 to 8 of the present patent application, particularly preferably the process products obtained according to claim 9 or 10, can preferably be used as starting material in process step a).

The optional step b) can sometimes also be carried out using suitable organic solvents instead of water. The objective is to set a viscosity of the spray feed which is suitable for carrying out spray drying. A suitable solids content is preferably in the range 5-50% by weight, particularly preferably from 15 to 25% by weight. Apart from water, it is also possible to use other solvents which do not cause any problems during spray drying and are suitable for setting an appropriate viscosity.

The drying step c) is preferably carried out at low temperatures, particularly preferably at low temperatures and reduced pressure. The drying temperature selected should preferably be less than 150°C in order to avoid dehydration of the calcium silicate hydrate particles. A convection drying oven, vacuum drying oven or fluidized-bed dryer is suitable for drying. A preferred drying method is spray drying since relatively high drying rates can be achieved.

The (co)polymers according to the invention could interact with the calcium silicate hydrate on mixing with an aqueous suspension of finely divided calcium silicate hydrate (C-S-H); in particular, an interaction between the carboxyl groups of the (co)polymer and calcium ions from the (C-S-H) could take place. Some shielding from other calcium silicate hydrate particles then presumably takes place during the drying process and agglomeration of the fine C-S-H particles during drying can thus be largely avoided. It is assumed that the stabilising effect of the (co)polymers according to the invention during the drying process is based on the abovementioned facts. Drying experiments (for comparison) on calcium silicate hydrate (C-S-H) without a stabilizer or with addition of materials which are not according to the invention gave less effective accelerators. This is attributed to agglomeration of the calcium silicate hydrate (C-S-H) particles in the absence of the stabilizer according to the invention. Only the use of the (co)polymers according to the invention made it possible for the finely divided calcium silicate hydrate particles which are largely stable in the aqueous suspension to be stabilized in the suspension and particularly during drying so that that they can be converted into the solid state without a significant reduction in effectiveness (as accelerator). The ratio of the number of the carboxylic acid groups and/or carboxylate groups to the sulphonic acid groups and/or sulphonate groups in the (co)polymers according to the invention should be from 1/20 to 20/1, preferably from 1/5 to 5/1, particularly preferably from 1/2 to 2/1. A deficiency of carboxylic acid groups leads to the affinity of the (co)polymers for the preferably finely divided calcium silicate hydrate (C-S-H) particles not being high enough, as a result of which the effectiveness as stabilizer during drying is insufficient and smaller accelerator effects are therefore found in the dried products. However, polymers having a very high proportion of carboxyl groups, e.g. poly(meth)acrylic acid (no sulphonic acid and/or sulphonate groups) have a retarding effect, presumably due to an excessively high affinity for calcium.

A further preferred embodiment of the process is characterized in that a process step d) comprising milling of the dried products from process step c) to powders follows.

An advantage of milling to powders is easier handling; in particular, a homogeneous distribution of the compositions of the invention in dry mortars is made considerably easier.

Preference is given to a process which is characterized in that the drying process c) is spray drying.

The invention also provides for the use of the compositions of the invention as curing accelerators in building material mixtures containing (portland) cement, slag sand, fly ash, silica dust, metakaolin, natural pozzuolanas, calcined oil shales and/or calcium aluminate cement, preferably the use of the compositions of the invention as curing accelerators in building material mixtures containing (portland) cement and binders based on calcium sulphate, particularly preferably the use of the compositions of the invention as curing accelerators in building material mixtures which contain essentially (portland) cement as binder.

The building material mixtures in which the compositions of the invention are used as curing accelerators preferably contain (portland) cement and at least one further component selected from the group consisting of slag sand, fly ash, silica dust, metakaolin, natural pozzuolanas, calcined oil shales and calcium aluminate cement. The proportion by mass of (portland) cement based on the total mass of the binders is particularly preferably at least 5%, particularly preferably at least 20%, in particular at least 40%.

The building material mixtures containing 1.) (portland) cement and 2.) binders based on calcium sulphate are not subject to any particular restrictions in respect of the ratios of 1.) and 2.). Preference is given to a ratio of 1.) to 2.) in the range from 9/1 to 1/9, preferably from 4/1 to 1/4.

The formulation "which contain essentially (portland) cement as binder" preferably means that the proportion of (portland) cement is at least 40 per cent by weight based on the total mass of all binders, particularly preferably at least 80 per cent by weight, and the (portland) cement especially preferably represents 100% of the binder.

The invention also relates to the use of the compositions of the invention as grinding aids in the production of cement, preferably in the grinding of clinker or clinker blend to form cement. Clinker blend refers preferably to a mixture of clinker and substitutes such as slag, fly ash and/or pozzuolanas. The compositions are used in amounts of from 0.001 % by weight to 5% by weight, preferably in amounts of from 0.01 % by weight to 0.5% by weight, based in each case on the clinker or clinker blend to be ground. It is possible to use the compositions of the invention as grinding aids in ball mills or else in vertical mills. The compositions of the invention can be used as grinding aids alone or else in combination with other grinding aids, such as, for example, mono-, di-, tri- and polyglycols, polyalcohols (for example glycerol in various degrees of purity, from the production of biodiesel, for example), amino alcohols (e.g. MEA, DEA, TEA, TIPA, THEED, DIHEIPA), organic acids and/or salts thereof (e.g. acetic acid and/or salts thereof, formates, gluconates), amino acids, sugars and residues from sugar production (e.g. molasses, vinasse), inorganic salts (chlorides, fluorides, nitrates, sulphates) and/or organic polymers (e.g. polyether carboxylates (PCEs)). It has been found that the early strengths of the (portland) cement thus produced, in particular, can be improved.

The invention also relates to the use of the compositions of the invention in a process for producing a sprayable composition comprising hydraulic binder, said composition comprising as essential components water, aggregates, hydraulic binder and accelerator(s), and being characterized in that the composition of the invention comprising calcium silicate hydrate is added before and/or at the spraying nozzle. In preferred embodiments, the solid compositions of the invention according to any of the dependent claims of this patent application can be employed. Further preferred embodiments of the process for producing a hydraulically setting, sprayable hydraulic binder composition are described in international application PCT/EP2010/062671. The corresponding accelerators of this patent application, based on calcium silicate hydrate, can be used in an analogous way in the processes of PCT/EP2010/062671.

The invention also provides building material mixtures containing the compositions of the invention and (portland) cement, slag sand, fly ash, silicate dust, metakaolin, natural pozzuolanas, calcined oil shales and/or calcium aluminate cement; preference is given to building material mixtures containing the compositions of the invention, (portland) cement and binders based on calcium sulphate, with particular preference being given to building material mixtures containing the compositions of the invention and containing essentially (portland) cement as binder. The calcium silicate hydrate present in the building material mixtures prior to the operation of mixing with make-up water has preferably not been formed in a hydration reaction of (portland) cement with water. Prior to the operation of mixing with make-up water, the building material mixtures particularly preferably contain no (portland) cement which has come into contact with water.

The building material mixtures preferably contain (portland) cement and at least one further component selected from the group consisting of slag sand, fly ash, silica dust, metakaolin, natural pozzuolanas, calcined oil shales and/or calcium aluminate cement. The proportion by mass of the (portland) cement based on the total mass of the binders is particularly preferably at least 5%, particularly preferably at least 20%, in particular at least 40%.

As regards the weight ratios of 1.) (portland) cement to 2.) binders based on calcium sulphate and also the definition of "which contain essentially (portland) cement as binder", the information given above applies analogously.

Preferred building material mixtures are tile adhesive formulations, renders, adhesive and reinforcing mortar, grouts, screeds and self-levelling knifing fillers. The curing accelerator composition, preferably liquid curing accelerator composition, is preferably present in the building material mixture in an amount of from 0.5% by weight to 20% by weight, preferably from 1 to 10% by weight, based on the (portland) cement, slag sand, fly ash, silica dust, metakaolin, natural pozzuolanas, calcined oil shales and/or calcium aluminate cement. The curing accelerator composition, preferably liquid curing accelerator composition, is particularly preferably present in the building material mixture in an amount of from 0.5% by weight to 20% by weight, preferably from 1 to 10% by weight, based on the (portland) cement.

The solid compositions of the invention are preferably used in dry mortar mixtures, especially in powder form. The solid compositions of the invention are preferably used in amounts of from 0.1 to 5% by weight, preferably from 0.1 to 2% by weight, based on the binder or binders, particularly preferably based on (portland) cement. The binders can in turn be one or more binders selected from the group consisting of (portland) cement, slag sand, fly ash, silica dust, metakaolin, natural pozzuolanas, calcined oil shales and/or calcium aluminate cement.

For the purposes of Illustration, the term building material mixtures can refer to mixtures in dry or aqueous form and in the cured or plastic state. Dry building material mixtures are preferred. Dry building material mixtures can, for example, be mixtures of the abovementioned binders, preferably (portland) cement, and the curing accelerator compositions (preferably in powder form) according to the invention. Mixtures in aqueous form, generally in the form of slurries, pastes, fresh mortar or fresh concrete, are produced by addition of water to the binder component or binder components and the curing accelerator composition; they then change over from the plastic state to the cured state.

Binders based on calcium sulphate are preferably gypsum, α-hemihydrate, β-hemihydrate, bassanite and/or anhydrite.

The building material mixtures can contain, for example, antifoams, air pore formers, fillers, redispersible polymer powders, retarders, thickeners, water retention agents and/or wetting agents as other additives.

### Examples

### 1. Preparation of the (co)polymers (polymeric spraying aids)

The composition of the polymeric spraying aids is summarized in Table 1.

**Table 1: Composition of the polymeric spraying aids**

| Additive | 2-Acrylamido-2-methyl propane-sulphonic acid (AMPS) monomer in the (co)polymer (mol%) | Acrylic acid (AA) monomer in the (co)polymer (mol%) | M_{w} of the (co)-polymers (g/mol) | Solids content (% by weight) |
|---|---|---|---|---|
| Polymer 1 (comparison) | 0 | 100 | 18 350 | 40.1 |
| Polymer 2 | 17 | 83 | 16 700 | 40.7 |
| Polymer 3 | 25 | 75 | 16 130 | 39.7 |
| Polymer 4 | 50 | 50 | 16 200 | 41.0 |
| Polymer 5 | 80 | 20 | 15 350 | 40.3 |
| Polymer 6 (comparison) | 100 | 0 | 17 900 | 40.1 |

The (co)polymers used were prepared according to the following general method using the amounts of monomers indicated in Table 1 :
A 5% strength Wako V50 azo initiator solution (corresponds to 0.2 mol% of azo initiator) is placed in a 1 litre four-neck flask provided with thermometer, pH meter and reflux condenser. This mixture is heated to 75°C under a blanket of nitrogen. After 75°C has been reached, a 40% strength, aqueous monomer mixture of 2-acrylamido-2-methylpropanesulphonic acid (AMPS) and acrylic acid (AA) (corresponding to Table 1) and 1 mol of 2-mercaptoethanol are metered in simultaneously over a period of 60 minutes. The temperature is maintained at about 80°C by means of cooling. After the addition is complete, stirring is continued for another one hour at 80°C. This gives slightly yellowish, clear aqueous (co)polymer solutions having a solids content of from 35 to 40% by weight and a pH of from 2 to 3.5.

The weight average molecular weight M_{w} of the (co)polymers (Table 1) was determined by means of size exclusion chromatography to determine average molar mass and conversion (column combinations: OH-Pak SB-G, OH-Pak SB 804 HQ and OH-Pak SB 802.5 HQ from Shodex, Japan; eluent: 80% by volume of an aqueous solution of HCO₂NH₄ (0.05 mol/l) and 20% by volume of acetonitrile; injection volume: 100 µl; flow rate: 0.5 ml/min). The calibration to determine the average molar mass was carried out using linear poly(ethylene oxide) and polyethylene glycol standards.

### 2. Liquid accelerator compositions

Examples of the production of the liquid compositions according to the invention:
Liquid accelerator CSH 1:
For the synthesis, the following components are weighed into a glass beaker in order and mixed briefly:

| | |
|---|---|
| Water glass Betol 39 (Woellner) | 14.3 g |
| Ca(OH)₂ (Alfa Aeser, 99%) | 4.9 g |
| Polymer 2 | 10.0 g |
| Water | 170.6 g |

The suspension is subsequently introduced into a 500 ml glass bottle containing 1 kg of yttrium-stabilized ZrO₂ balls having a diameter of 1 mm. The bottle is subsequently closed and placed in a shaker (Fast & Fluid) and shaken for 90 minutes. The resulting suspension is subsequently separated from the ZrO₂ balls and dispensed into PE bottles. The solids content of CSH 1 is 7.06% by weight. The active content of CSH 1 is 5.61% by weight. The active content is preferably defined as the solids content in per cent by weight minus the proportion of organic material, in particular minus the proportion of the (co)polymers according to the invention. The solids content is preferably determined by drying the products to constant weight at a temperature of 60°C in a drying oven.
Liquid accelerator CSH 2:
Accelerator 2 is produced in a manner analogous to accelerator 1, but the composition for the synthesis is as follows and a 250 ml glass flask containing 500 g of yttrium-stabilized ZrO₂ balls having a diameter of 1 mm was used:

| | |
|---|---|
| Water glass Betol 39 (Woellner) | 7.2 g |
| Ca(OH)₂ (Alfa Aeser, 99%) | 2.4 g |
| Polymer 3 | 5.0 g |
| Water | 85.4 g |

The solids content of CSH 2 is 7.68% by weight. The active content of CSH 2 is 5.36% by weight. The definitions given above in the case of CSH 1 for the active content applies.

Tests using the liquid compositions (isothermal heat flow calorimetry):
The characterisation of the resulting composition which acts as a curing accelerator was carried out by means of isothermal heat flow calorimetry using a TamAir calorimeter from TA Instruments. Here, a cement paste with and without curing accelerator was prepared and evolution of heat during curing for 22 hours at 20°C was monitored. As cement, use was made of a Cem I 52.5 R cement.

The cement paste was produced using 20 g of cement, 6.5 g of water and 0.12 g, based on the active content, of the liquid accelerator CSH 1 or CSH 2 (corresponds to an amount of 2.14 g of CSH 1 per 20 g of cement or 2.24 g of CSH2 per 20 g of cement). When the liquid accelerators compositions (CSH1 and CSH2) are added, the amount of make-up water is reduced corresponding to the amount of water introduced by the accelerators (same W/C value of 0.5 in the case of all measurements).

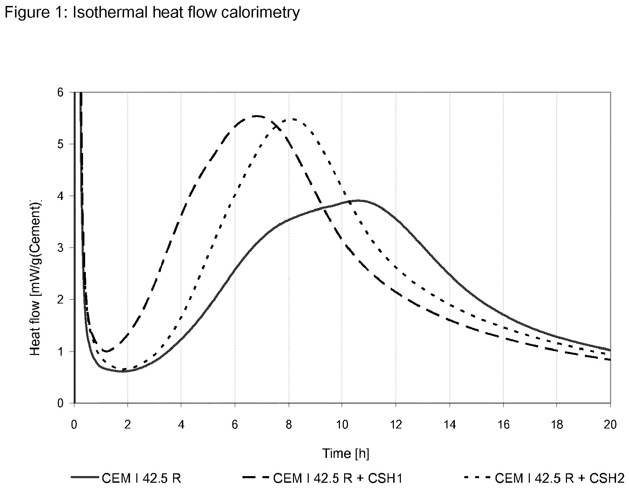

The heat flow curves for the two accelerators CSH 1 and CSH 2 according to the invention are shown in Figure 1. The heat flow curves very clearly show the effect of the liquid accelerator compositions according to the invention on the hydration process compared to the reference without curing accelerator. The significantly more rapid, compared to the reference, hydration reaction results in higher early strengths after 6 hours.

Tests using the liquid compositions (standard mortar test, 6 hours):
The effectiveness of the accelerator composition according to the invention was also determined by means of 6-hour compressive strengths in a standard mortar (prisms analogous to DIN EN 196-1). The results are summarized in Table 2.

Formulation of standard mortar:
450 g of cement (CEM I 52.5 R)
1350 g of standard sand
225 g of water

When the liquid accelerator composition (CSH1) is added, the amount of make-up water is reduced corresponding to the amount of water introduced by the accelerator.

**Table 2:**

| Accelerator | Amount of accelerator added (calculated as active content) based on the cement (% by weight) | Compressive strength after 6 h (MPa) |
|---|---|---|
| Reference (without accelerator) | - | < 0.5 |
| Calcium formate, anhydrous (comp.) | 0.5 | 0.5 |
| CaCl₂, anhydrous (comp.) | 0.5 | 3.0 |
| Ca(NO₃)₂, anhydrous (comp.) | 0.5 | 1.8 |
| CSH 1 | 0.5* | 1.9 |

| | | |
|---|---|---|
| ^{*} corresponds to an added amount of 8.91 % by weight of CSH 1 | | |

At the same added amount based on the active content, an improved accelerator effect can be seen compared to the references calcium nitrate and calcium formate.

In this test, calcium chloride gives quite good results but it is generally undesirable or even banned according to national standards in building-chemical applications because of its chloride content which incurs a risk of corrosion. In addition, none of the accelerators based on calcium formate, calcium chloride or calcium nitrate (comparative examples in Table 2) are able to achieve good final strengths (after 28 days) similar to those obtained using the accelerator according to the invention.

### 3. Solid accelerator compositions

Production of the solid compositions (pulverulent accelerators) according to the invention:
These were produced according to the following general method:
X-Seed®-100 (BASF Construction Chemicals GmbH) was used as starting material.

The suspension was mixed with 5% by weight of spraying aid (additives in Table 1) based on the solids content of X-Seed®-100 (solids content is 21.7% by weight) for 10 minutes before drying. The suspension formed was converted into the pulverulent state by spray drying using a dryer from Niro at inlet temperatures of 160°C and outlet temperatures of 50-60°C under a nitrogen atmosphere.

**Table 3: Overview of the drying experiments**

| Experiment | Auxiliary in spray drying | Designation of powder |
|---|---|---|
| 1 (comparison) | - | Powder 1 (comparison) |
| 2 (comparison) | Polymer 1 (comparison) | Powder 2 (comparison) |
| 3 | Polymer 2 | Powder 3 |
| 4 | Polymer 3 | Powder 4 |
| 5 | Polymer 4 | Powder 5 |
| 6 | Polymer 5 | Powder 6 |
| 7 (comparison) | Polymer 6 (comparison) | Powder 7 (comparison) |

Tests using the pulverulent compositions (standard mortar test, 6 hours):
The effectiveness of the accelerator composition according to the invention was determined by means of 6-hour compressive strengths in a standard mortar (prisms analogous to DIN EN 196-1). To be able to compare the measurements using the various accelerators, the amount added to the mortar was in each case selected so that 1.44% by weight, based on the mass of the cement, of solid from X-Seed® 100 was added in experiments 3 and 12 to 17. This means that, of course, X-Seed® 100 is not added as such (as in comparative experiment 2) but instead a corresponding amount of solids content of the starting material X-Seed® 100 is added in the form of the pulverulent product to be processed.

Formulation of standard mortar:
450 g of cement (CEM I 52.5 R)
1350 g of standard sand
225 g of water

When a liquid accelerator composition is added, the amount of the make-up water is reduced corresponding to the amount of water introduced by the accelerator.

**Table 4: Results of the mortar tests for pulverulent accelerators**

| Experiment | Accelerator | Accelerator (g) | Compressive strength after 6 h (MPa) | Mould |
|---|---|---|---|---|
| 1 (Comp.) | - | 0 | ∼ 0.5 | Styropor |
| 2 (Comp.) | X-Seed®100 suspension | 31.34 | 15.4 | Styropor |
| 3 (Comp.) | Powder 1 (X-Seed®100 dried without additive) | 6.43 | 7.2 | Styropor |
| 4 (Comp.) | Ca formate (100 %) | 1.13 | not measurable | Styropor |
| 5 (Comp.) | Ca formate (100 %) | 2.25 | 0.5 | Styropor |
| 6 (Comp.) | Ca formate (100 %) | 4.50 | 2.2 | Styropor |
| 7 (Comp.) | Ca formate (100 %) | 9.00 | 5.9 | Styropor |
| 8 (Comp.) | Ca(NO₃)₂ · 4 H₂O | 1.63 | not measurable | Styropor |
| 9 (Comp.) | Ca(NO₃)₂ · 4 H₂O | 3.24 | 1.8 | Styropor |
| 10 (Comp.) | Ca(NO₃)₂ · 4 H₂O | 6.48 | 2.2 | Styropor |
| 11 (Comp.) | Ca(NO₃)₂ · 4 H₂O | 12.95 | 4.4 | Styropor |
| 12 (Comp.) | Powder 2 (Polymer 1) | 6.82 | 7.4 | Styropor |
| 13 | Powder 3 (Polymer 2) | 6.82 | 11.5 | Styropor |
| 14 | Powder 4 (Polymer 3) | 6.82 | 12.8 | Styropor |
| 15 | Powder 5 (Polymer 4) | 6.82 | 14.0 | Styropor |
| 16 | Powder 6 (Polymer 5) | 6.82 | 7.7 | Styropor |
| 17 (Comp.) | Powder 7 (Polymer 6) | 6.82 | 5.3 | Styropor |

It was able to be shown by means of the examples that the compositions according to the invention in liquid form (Table 2) and in dried form (Table 4) significantly increase the early strength after 6 hours in the mortar test.

In the mortar tests using pulverulent accelerators (Table 4), it is found, in particular, that even at extremely high added amounts of the comparative accelerators calcium formate and calcium nitrate it is not possible to achieve, even approximately, the high accelerator activities (early strengths) observed in the case of the pulverulent products according to the invention. The pulverulent products according to the invention even achieve approximately the early strength of the liquid reference X-Seed®100 (suspension), which indicates only very small decreases in the accelerator activity of X-Seed®100 during drying. These effects can be attributed to the surprisingly strong stabilising action of the (co)polymers having carboxylic acid groups and/or carboxylate groups and sulphonic acid groups and/or sulphonate groups in the claimed ratios during drying.

A polyacrylic acid without sulphonic acid groups and/or sulphonate groups (comparative experiment 12), for example, does not display this effect. Conversely, a homopolymer of 2-acrylamido-2-methylpropanesulphonic acid (AMPS) is likewise not efficient (comparative example 17). In addition, none of the comparative examples in Table 4, in particular none of the comparative examples 4 to 11 (conventional accelerators based on calcium formate or calcium nitrate) are able to achieve final strengths (after 28 days) which are similarly good to those achieved using the pulverulent accelerators according to the invention.

## Claims

1. Composition containing calcium silicate hydrate and at least one (co)polymer having carboxylic acid groups and/or carboxylate groups and sulphonic acid groups and/or sulphonate groups, wherein the molar ratio of the number of carboxylic acid groups and/or carboxylate groups to the sulphonic acid groups and/or sulphonate groups is from 1/20 to 20/1 and the weight average molecular weight M_{w} of the (co)polymer(s) is from 8 000 g/mol to 200 000 g/mol, the weight average molecular weight M_{w} is determined by means of size exclusion chromatography according to the indications in the specification of WO 2012/143206 A1 on page 13, lines 35 to 41.

2. Composition according to Claim 1, wherein the composition is an aqueous suspension.

3. Composition according to Claim 1, wherein the composition is solid.

4. Composition according to any of Claims 1, 2 or 3, wherein the (co)polymer has a main polymer chain of carbon atoms and the ratio of the sum of the number of carboxylic acid groups and/or carboxylate groups and sulphonic acid groups and/or sulphonate groups to the number of carbon atoms in the main polymer chain is in the range from 0.1 to 0.6.

5. Composition according to any of Claims 1 to 4, wherein the (co)polymer can be obtained from a free-radical (co)polymerisation and the carboxylic acid groups and/or carboxylate groups are derived from monocarboxylic acid monomers.

6. Composition according to any of Claims 1 to 5, wherein the (co)polymer can be obtained from a free-radical (co)polymerisation and the carboxylic acid groups and/or carboxylate groups are derived from the monomers acrylic acid and/or methacrylic acid and the sulphonic acid groups and/or sulphonate groups are derived from 2-acrylamido-2-methylpropanesulphonic acid.

7. Composition according to any of Claims 1 to 6, wherein the weight ratio of the (co)polymer or (co)polymers to the calcium silicate hydrate is from 1/100 to 4/1.

8. Building material mixtures containing compositions according to any of Claims 1 to 6 and cement, slag sand, fly ash, silica dust, metakaolin, natural pozzolanas, calcined oil shales and/or calcium aluminate cement.

9. Process for producing an aqueous suspension of calcium silicate hydrate according to Claim 2 by reaction of a water-soluble calcium compound with a water-soluble silicate compound in the presence of an aqueous solution containing at least one (co)polymer having carboxylic acid groups and/or carboxylate groups and sulphonic acid groups and/or sulphonate groups, where the ratio of the number of carboxylic acid groups and/or carboxylate groups to the sulphonic acid groups and/or sulphonate groups is from 1/20 to 20/1.

10. Process for producing an aqueous suspension of calcium silicate hydrate according to Claim 2 by reaction of a calcium compound with a silicon dioxide-containing compound under alkaline conditions, **characterized in that** the reaction takes place in the presence of an aqueous solution of a (co)polymer having carboxylic acid groups and/or carboxylate groups and sulphonic acid groups and/or sulphonate groups, where the molar ratio of the number of carboxylic acid groups and/or carboxylate groups to the sulphonic acid groups and/or sulphonate groups is from 1/20 to 20/1.

11. Process for producing solid compositions according to Claim 3, wherein the following process steps are carried out:
a) mixing of an aqueous suspension containing calcium silicate hydrate with at least one (co)polymer having carboxylic acid groups and/or carboxylate groups and sulphonic acid groups and/or sulphonate groups, where the ratio of the number of carboxylic acid groups and/or carboxylate groups to the sulphonic acid groups and/or sulphonate groups is from 1/20 to 20/1,
b) optionally setting of a suitable solids content of the product from step a) by dilution with water and
c) drying of the product from step a) or b).

12. Process according to Claim 11, **characterized in that** the aqueous suspension which contains calcium silicate hydrate and (co)polymer according to the invention and is used as starting material in process step a) has been obtained by reaction of a water-soluble calcium compound with a water-soluble silicate compound in the presence of an aqueous solution containing at least one (co)polymer having carboxylic acid groups and/or carboxylate groups and sulphonic acid groups and/or sulphonate groups, where the ratio of the number of carboxylic acid groups and/or carboxylate groups to the sulphonic acid groups and/or sulphonate groups is from 1/20 to 20/1 and the weight average molecular weight M_{w} of the (co)polymer(s) is from 8 000 g/mol to 200 000 g/mol, the weight average molecular weight M_{w} is determined by means of size exclusion chromatography according to the indications in the specification of WO 2012/143206 A1 on page 13, lines 35 to 41, or has been obtained by reaction of a calcium compound with a silicon dioxide-containing compound under alkaline conditions, **characterized in that** the reaction takes place in the presence of an aqueous solution of a (co)polymer having carboxylic acid groups and/or carboxylate groups and sulphonic acid groups and/or sulphonate groups, where the molar ratio of the number of carboxylic acid groups and/or carboxylate groups to the sulphonic acid groups and/or sulphonate groups is from 1/20 to 20/1 and the weight average molecular weight M_{w} of the (co)polymer(s) is from 8 000 g/mol to 200 000 g/mol, the weight average molecular weight M_{w} is determined by means of size exclusion chromatography according to the indications in the specification of WO 2012/143206 A1 on page 13, lines 35 to 41, or has been obtained by reaction of a water-soluble calcium compound with a water-soluble silicate compound in the presence of an aqueous solution which contains a water-soluble comb polymer which is suitable as plasticizer for hydraulic binders.

13. Process according to Claim 11 or 12, **characterized in that** the drying process c) is spray drying.

14. Use of compositions according to any of Claims 1 to 6 as curing accelerators in building material mixtures containing cement, slag sand, fly ash, silica dust metakaolin, natural pozzolanas, calcined oil shales and/or calcium aluminate cement.

15. Use of compositions according to any of Claims 1 to 6 as grinding aid in the production of cement.

## Patentansprüche

1. Zusammensetzung, enthaltend Calciumsilikathydrat und mindestens ein (Co)polymer, welches Carbonsäuregruppen und/oder Carboxylatgruppen und Sulfonsäuregruppen und/oder Sulfonatgruppen aufweist, wobei das Molverhältnis der Anzahl von Carbonsäuregruppen und/oder Carboxylatgruppen zu den Sulfonsäuregruppen und/oder Sulfonatgruppen von 1/20 bis 20/1 beträgt und das gewichtsmittlere Molekulargewicht M_{w} des oder der (Co)polymere 8000 g/mol bis 200.000 g/mol beträgt, wobei das gewichtsmittlere Molekulargewicht M_{w} mittels Größenausschlusschromatographie gemäß den Angaben in der Beschreibung der WO 2012/143206 A1 auf Seite 13, Zeilen 35 bis 41, bestimmt wird.

2. Zusammensetzung nach Anspruch 1, wobei die Zusammensetzung eine wässrige Suspension ist.

3. Zusammensetzung nach Anspruch 1, wobei die Zusammensetzung fest ist.

4. Zusammensetzung nach einem der Ansprüche 1, 2 oder 3, wobei das (Co)polymer eine Polymerhauptkette aus Kohlenstoffatomen aufweist und das Verhältnis der Summe der Anzahl von Carbonsäuregruppen und/oder Carboxylatgruppen und Sulfonsäuregruppen und/oder Sulfonatgruppen zu der Anzahl von Kohlenstoffatomen in der Polymerhauptkette im Bereich von 0,1 bis 0,6 liegt.

5. Zusammensetzung nach einem der Ansprüche 1 bis 4, wobei das (Co)polymer aus einer radikalischen (Co)polymerisation erhältlich ist und die Carbonsäuregruppen und/oder Carboxylatgruppen sich von Monocarbonsäuremonomeren ableiten.

6. Zusammensetzung nach einem der Ansprüche 1 bis 5, wobei das (Co)polymer aus einer radikalischen (Co)polymerisation erhältlich ist und die Carbonsäuregruppen und/oder Carboxylatgruppen sich von den Monomeren Acrylsäure und/oder Methacrylsäure ableiten und die Sulfonsäuregruppen und/oder Sulfonatgruppen sich von 2-Acrylamido-2-methylpropansulfonsäure ableiten.

7. Zusammensetzung nach einem der Ansprüche 1 bis 6, wobei das Gewichtsverhältnis des (Co)polymers oder der (Co)polymere zum Calciumsilikathydrat 1/100 bis 4/1 beträgt.

8. Baustoffmischungen, enthaltend Zusammensetzungen nach einem der Ansprüche 1 bis 6 und Zement, Hüttensand, Flugasche, Silikastaub, Metakaolin, natürliche Puzzolane, gebrannte Ölschiefer und/oder Calciumaluminatzement.

9. Verfahren zur Herstellung einer wässrigen Suspension von Calciumsilikathydrat gemäß Anspruch 2 durch Reaktion einer wasserlöslichen Calciumverbindung mit einer wasserlöslichen Silikatverbindung in Gegenwart einer wässrigen Lösung, die mindestens ein (Co)polymer, welches Carbonsäuregruppen und/oder Carboxylatgruppen und Sulfonsäuregruppen und/oder Sulfonatgruppen aufweist, enthält, wobei das Verhältnis der Anzahl von Carbonsäuregruppen und/oder Carboxylatgruppen zu den Sulfonsäuregruppen und/oder Sulfonatgruppen von 1/20 bis 20/1 beträgt.

10. Verfahren zur Herstellung einer wässrigen Suspension von Calciumsilikathydrat gemäß Anspruch 2 durch Reaktion einer Calciumverbindung mit einer siliciumdioxidhaltigen Verbindung unter alkalischen Bedingungen, **dadurch gekennzeichnet, dass** die Reaktion in Gegenwart einer wässrigen Lösung eines (Co)polymers, welches Carbonsäuregruppen und/oder Carboxylatgruppen und Sulfonsäuregruppen und/oder Sulfonatgruppen aufweist, stattfindet, wobei das Molverhältnis der Anzahl von Carbonsäuregruppen und/oder Carboxylatgruppen zu den Sulfonsäuregruppen und/oder Sulfonatgruppen von 1/20 bis 20/1 beträgt.

11. Verfahren zur Herstellung von festen Zusammensetzungen gemäß Anspruch 3, wobei folgende Verfahrensschritte durchgeführt werden:
a) Vermischen einer wässrigen Suspension, die Calciumsilikathydrat enthält, mit mindestens einem (Co)polymer, welches Carbonsäuregruppen und/oder Carboxylatgruppen und Sulfonsäuregruppen und/oder Sulfonatgruppen aufweist, wobei das Verhältnis der Anzahl von Carbonsäuregruppen und/oder Carboxylatgruppen zu den Sulfonsäuregruppen und/oder Sulfonatgruppen von 1/20 bis 20/1 beträgt,
b) optional Einstellen eines geeigneten Feststoffgehalts des Produkts aus Schritt a) durch Verdünnen mit Wasser und
c) Trocknen des Produkts aus Schritt a) oder (b).

12. Verfahren nach Anspruch 11, **dadurch gekennzeichnet, dass** die in Verfahrensschritt a) als Edukt eingesetzte wässrige Suspension, die Calciumsilikathydrat und erfindungsgemäßes (Co)polymer enthält, durch Reaktion einer wasserlöslichen Calciumverbindung mit einer wasserlöslichen Silikatverbindung in Gegenwart einer wässrigen Lösung, die mindestens ein (Co)polymer, welches Carbonsäuregruppen und/oder Carboxylatgruppen und Sulfonsäuregruppen und/oder Sulfonatgruppen aufweist, erhalten wurde, wobei das Verhältnis der Anzahl von Carbonsäuregruppen und/oder Carboxylatgruppen zu den Sulfonsäuregruppen und/oder Sulfonatgruppen von 1/20 bis 20/1 beträgt und das gewichtsmittlere Molekulargewicht M_{w} des oder der (Co)polymere 8000 g/mol bis 200.000 g/mol beträgt, wobei das gewichtsmittlere Molekulargewicht M_{w} mittels Größenausschlusschromatographie gemäß den Angaben in der Beschreibung der WO 2012/143206 A1 auf Seite 13, Zeilen 35 bis 41, bestimmt wird, oder durch Reaktion einer Calciumverbindung mit einer siliciumdioxidhaltigen Verbindung unter alkalischen Bedingungen erhalten wurde, **dadurch gekennzeichnet, dass** die Reaktion in Gegenwart einer wässrigen Lösung eines (Co)polymers, welches Carbonsäuregruppen und/oder Carboxylatgruppen und Sulfonsäuregruppen und/oder Sulfonatgruppen aufweist, stattfindet, wobei das Molverhältnis der Anzahl von Carbonsäuregruppen und/oder Carboxylatgruppen zu den Sulfonsäuregruppen und/oder Sulfonatgruppen von 1/20 bis 20/1 beträgt und das gewichtsmittlere Molekulargewicht M_{w} des oder der (Co)polymere 8000 g/mol bis 200.000 g/mol beträgt, wobei das gewichtsmittlere Molekulargewicht M_{w} mittels Größenausschlusschromatographie gemäß den Angaben in der Beschreibung der WO 2012/143206 A1 auf Seite 13, Zeilen 35 bis 41, bestimmt wird, oder durch Reaktion einer wasserlöslichen Calciumverbindung mit einer wasserlöslichen Silikatverbindung in Gegenwart einer wässrigen Lösung, die ein wasserlösliches Kammpolymer, das als Fließmittel für hydraulische Bindemittel geeignet ist, enthält, erhalten wurde.

13. Verfahren nach Anspruch 11 oder 12, **dadurch gekennzeichnet, dass** es sich bei dem Trocknungsverfahren c) um Sprühtrocknung handelt.

14. Verwendung von Zusammensetzungen gemäß einem der Ansprüche 1 bis 6 als Erhärtungsbeschleuniger in Baustoffmischungen, die Zement, Hüttensand, Flugasche, Silikastaub, Metakaolin, natürliche Puzzolane, gebrannte Ölschiefer und/oder Calciumaluminatzement enthalten.

15. Verwendung von Zusammensetzungen nach einem der Ansprüche 1 bis 6 als Mahlhilfsmittel bei der Herstellung von Zement.

## Revendications

1. Composition contenant du silicate de calcium hydraté et au moins un (co)polymère ayant des groupes acide carboxylique et/ou des groupes carboxylate et des groupes acide sulfonique et/ou des groupes sulfonate, dans laquelle le rapport molaire du nombre de groupes acide carboxylique et/ou de groupes carboxylate au nombre de groupes acide sulfonique et/ou de groupes sulfonate est de 1/20 à 20/1 et la masse moléculaire moyenne en poids M_{w} du ou des (co)polymères est de 8 000 g/mol à 200 000 g/mol, la masse moléculaire moyenne en poids M_{w} étant déterminée au moyen de la chromatographie d'exclusion diffusion selon les indications contenues dans la description du document WO 2012/143206 A1 à la page 13, lignes 35 à 41.

2. Composition selon la revendication 1, la composition étant une suspension aqueuse.

3. Composition selon la revendication 1, la composition étant solide.

4. Composition selon l'une quelconque des revendications 1, 2 ou 3, dans laquelle le (co)polymère a une chaîne principale de polymère constituée d'atomes de carbone et le rapport de la somme du nombre de groupes acide carboxylique et/ou de groupes carboxylate et du nombre de groupes acide sulfonique et/ou de groupes sulfonate au nombre d'atomes de carbone dans la chaîne principale de polymère est dans la plage de 0,1 à 0,6.

5. Composition selon l'une quelconque des revendications 1 à 4, dans laquelle le (co)polymère peut être obtenu à partir d'une (co)polymérisation radicalaire et les groupes acide carboxylique et/ou les groupes carboxylate sont dérivés de monomères acides monocarboxyliques.

6. Composition selon l'une quelconque des revendications 1 à 5, dans laquelle le (co)polymère peut être obtenu à partir d'une (co)polymérisation radicalaire et les groupes acide carboxylique et/ou les groupes carboxylate sont dérivés des monomères acide acrylique et/ou acide méthacrylique et les groupes acide sulfonique et/ou les groupes sulfonate sont dérivés d'acide 2-acrylamido-2-méthylpropanesulfonique.

7. Composition selon l'une quelconque des revendications 1 à 6, dans laquelle le rapport pondéral du (co)polymère ou des (co)polymères au silicate de calcium hydraté est de 1/100 à 4/1.

8. Mélanges pour matériau de construction contenant des compositions selon l'une quelconque des revendications 1 à 6 et du ciment, du sable de laitier, de la cendre volante, de la poussière de silice, du métakaolin, des pouzzolanes naturelles, des schistes bitumineux calcinés et/ou du ciment d'aluminates de calcium.

9. Procédé pour la production d'une suspension aqueuse de silicate de calcium hydraté selon la revendication 2 par réaction d'un composé hydrosoluble du calcium avec un composé silicate hydrosoluble en présence d'une solution aqueuse contenant au moins un (co)polymère ayant des groupes acide carboxylique et/ou des groupes carboxylate et des groupes acide sulfonique et/ou des groupes sulfonate, le rapport du nombre de groupes acide carboxylique et/ou de groupes carboxylate au nombre de groupes acide sulfonique et/ou de groupes sulfonate étant de 1/20 à 20/1.

10. Procédé pour la production d'une suspension aqueuse de silicate de calcium hydraté selon la revendication 2 par réaction d'un composé du calcium avec un composé contenant du dioxyde de silicium dans des conditions alcalines, **caractérisé en ce que** la réaction a lieu en présence d'une solution aqueuse d'un (co)polymère ayant des groupes acide carboxylique et/ou des groupes carboxylate et des groupes acide sulfonique et/ou des groupes sulfonate, le rapport molaire du nombre de groupes acide carboxylique et/ou de groupes carboxylate au nombre de groupes acide sulfonique et/ou de groupes sulfonate étant de 1/20 à 20/1.

11. Procédé pour la production de compositions solides selon la revendication 3, dans lequel les étapes de procédé suivantes sont mises en œuvre :
a) le mélange d'une suspension aqueuse contenant du silicate de calcium hydraté avec au moins un (co)polymère ayant des groupes acide carboxylique et/ou des groupes carboxylate et des groupes acide sulfonique et/ou des groupes sulfonate, le rapport molaire du nombre de groupes acide carboxylique et/ou de groupes carboxylate au nombre de groupes acide sulfonique et/ou de groupes sulfonate étant de 1/20 à 20/1,
b) éventuellement le réglage d'une teneur en matières solides appropriée du produit provenant de l'étape a) par dilution avec de l'eau et
c) le séchage du produit provenant de l'étape a) ou b).

12. Procédé selon la revendication 11, **caractérisé en ce que** la suspension aqueuse qui contient du silicate de calcium hydraté et du (co)polymère selon l'invention et qui est utilisée comme matière de départ dans l'étape de procédé a) a été obtenue par réaction d'un composé hydrosoluble du calcium avec un composé silicate hydrosoluble en présence d'une solution aqueuse contenant au moins un (co)polymère ayant des groupes acide carboxylique et/ou des groupes carboxylate et des groupes acide sulfonique et/ou des groupes sulfonate, le rapport du nombre de groupes acide carboxylique et/ou de groupes carboxylate au nombre de groupes acide sulfonique et/ou de groupes sulfonate étant de 1/20 à 20/1 et la masse moléculaire moyenne en poids M_{w} du ou des (co)polymères étant de 8 000 g/mol à 200 000 g/mol, la masse moléculaire moyenne en poids M_{w} étant déterminée au moyen de la chromatographie d'exclusion diffusion selon les indications contenues dans la description du document WO 2012/143206 A1 à la page 13, lignes 35 à 41, ou a été obtenue par réaction d'un composé du calcium avec un composé contenant du dioxyde de silicium dans des conditions alcalines, **caractérisé en ce que** la réaction a lieu en présence d'une solution aqueuse d'un (co)polymère ayant des groupes acide carboxylique et/ou des groupes carboxylate et des groupes acide sulfonique et/ou des groupes sulfonate, le rapport molaire du nombre de groupes acide carboxylique et/ou de groupes carboxylate au nombre de groupes acide sulfonique et/ou de groupes sulfonate étant de 1/20 à 20/1 et la masse moléculaire moyenne en poids M_{w} du ou des (co)polymères étant de 8 000 g/mol à 200 000 g/mol, la masse moléculaire moyenne en poids M_{w} étant déterminée au moyen de la chromatographie d'exclusion diffusion selon les indications contenues dans la description du document WO 2012/143206 A1 à la page 13, lignes 35 à 41, ou a été obtenue par réaction d'un composé hydrosoluble du calcium avec un composé silicate hydrosoluble en présence d'une solution aqueuse qui contient un polymère en peigne hydrosoluble qui est approprié comme plastifiant pour des liants hydrauliques.

13. Procédé selon la revendication 11 ou 12, **caractérisé en ce que** le procédé de séchage c) est un séchage par pulvérisation.

14. Utilisation de compositions selon l'une quelconque des revendications 1 à 6 comme accélérateurs de durcissement dans des mélanges pour matériau de construction contenant du ciment, du sable de laitier, de la cendre volante, de la poussière de silice, du métakaolin, des pouzzolanes naturelles, des schistes bitumineux calcinés et/ou du ciment d'aluminates de calcium.

15. Utilisation de compositions selon l'une quelconque des revendications 1 à 6 comme adjuvant de broyage dans la production de ciment.
